(19) Europäisches Patentamt
European Patent Office
Office européen des brevets

(11) **EP 2 103 790 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(51) Int Cl.:
***F02M 25/06*** (2016.01)

(21) Anmeldenummer: **08019449.1**

(22) Anmeldetag: **06.11.2008**

(54) **Verfahren zum Betrieb eines Verbrennungsmotor mit Selbstzündung und einem optimierten Injektor**

Method to operate a combustion engine with self-ignition and optimised injector

Méthode d'utilisation d'un moteur à combustion avec auto-allumage et injecteur optimisé

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.11.2007 DE 102007053888**

(43) Veröffentlichungstag der Anmeldung:
**23.09.2009 Patentblatt 2009/39**

(73) Patentinhaber: **Volkswagen Aktiengesellschaft 38440 Wolfsburg (DE)**

(72) Erfinder:
- **Pott, Ekkehardt, Dr.**
  **38518 Gifhorn (DE)**
- **Hahne, Bernd**
  **38126 Braunschweig (DE)**
- **Vanhaelst, Robin, Dr.**
  **38442 Wolfsburg (DE)**

(74) Vertreter: **Pohlmann, Bernd Michael RPK Patentanwälte Reinhardt, Pohlmann und Kaufmann Partnerschaft mbB Rossmarkt 12 60311 Frankfurt am Main (DE)**

(56) Entgegenhaltungen:
WO-A2-2006/058617    DE-A1- 3 612 029
DE-A1- 10 348 366    JP-A- 2002 364 366

- BAUDER R ET AL: "Der neue Audi 4,2-l-V8-TDI-Motor. Teil 2: Thermodynamik, Applikation und Abgasnachbehandlung", MTZ MOTORTECHNISCHE ZEITSCHRIFT, VIEWEG VERLAG, WIESBADEN, DE, Bd. 66, Nr. 11, 1. November 2005 (2005-11-01), Seiten 898-907, XP001519238, ISSN: 0024-8525
- WESSLAU M ET AL: "Homogene Dieselverbrennung - Verfahren zur Emissionsreduzierung. Teil1: Untersuchungen am Pkw-Dieselmotor", MTZ MOTORTECHNISCHE ZEITSCHRIFT, VIEWEG VERLAG, WIESBADEN, DE, Bd. 67, Nr. 10, 1. Oktober 2006 (2006-10-01), Seiten 798-805, XP001519819, ISSN: 0024-8525
- MATTES W ET AL: "BMW-Sechszylinder-Dieselmotor mit Euro-4-Technik", MTZ MOTORTECHNISCHE ZEITSCHRIFT, VIEWEG VERLAG, WIESBADEN, DE, Bd. 65, Nr. 7/8, 1. Juli 2004 (2004-07-01), Seiten 540-550, XP001518769, ISSN: 0024-8525
- "Internal Combustion Engine Fundamentals, Chapter 8: Charge Motion Within The Cylinder; Swirl ED - Heywood John B", 1. Januar 1988 (1988-01-01), INTERNAL COMBUSTION ENGINE FUNDAMENTALS; [MCGRAW-HILL SERIES IN MECHANICAL ENGINEERING], MCGRAW HILL INTERNATIONAL EDITIONS, NEW YORK [U.A.], PAGE(S) 342 - 345, XP002730572, ISBN: 978-0-07-028637-5
- HONGMING XU: "Some Critical Technical Issues on the Steady Flow Testing of Cylinder Heads", SAE TECHNICAL PAPER SERIES, no. 2001-01-1308, 5 March 2001 (2001-03-05), - 8 March 2001 (2001-03-08), Detroit ISSN: 0148-7191

**Beschreibung**

Die vorliegende Erfindung betrifft ein Verfahren zum Betrieb eines Verbrennungsmotors mit Selbstzündung (Dieselmotor) gemäß dem Oberbegriff des unabhängigen Patentanspruchs.

Die Erfindung bezieht sich insbesondere auf einen gattungsgemäßen Verbrennungsmotor mit verringerter Ruß- und Stickoxidemissionen (NOx).

Zur Erfüllung heutiger und zukünftiger strenger Emissionsgrenzwerte für Diesel-Pkw ist der Einsatz verschiedener Technologien bekannt, die eine Abstimmung relativ vieler inner- und außermotorischer Maßnahmen zur Emissionsreduzierung beinhalten. Bekannte motorische Maßnahmen zur Reduzierung der Rohemissionen betreffen das Brennverfahren (Brenngestaltung, Kanalform, Drall der Einlassströmung), Einstellung des Lambdawertes, Einspritzzeitpunkt und Abgasrückführung, Einspritzsystem (Anpassung des Einspritzverlaufs), Abgasrückführung, Aufladung, Ladeluftkühlung, Wassereinspritzung. Außermotorische Abgasnachbehandlungsmaßnahmen umfassen den Einsatz von Partikelfiltern, Oxidationskatalysatoren und NOx-Katalysatoren.

Bekannt ist auch, dass bei Dieselmotoren Maßnahmen, die die Rußemissionen reduzieren, dazu tendieren, die Strickoxidemissionen zu erhöhen. Während es noch für die Einhaltung der Euro4-Abgasgrenzwerte möglich war, bei relativ niedrigen NOx-Emissionen relativ hohe Rußemissionen zu tolerieren, da letztere durch im Abgassystem angeordnete Partikelfilter aufgefangen werden konnten, ist dies bei den strengeren Abgasgrenzwerten nach Euro5 nicht mehr möglich, da die Partikelfilter nach zu kurzer Zeit bereits eine hohe Beladung aufweisen, was eine häufige Regeneration mit entsprechend hohem Kraftstoffverbrauch und erhöhter Kohlendioxidemission zur Folge hat.

Aus der DE 3612029 A1 ist bereits eine luftverdichtende Hubkolbenbrennkraftmaschine bekannt. Mit einer im Kolbenbogen annähernd zentrisch angeordneten rotationssymmetrischen Brennraummulden, eine Einspritzvorrichtung die eine in die Brennraummulde einspritzende Einspritzdüse mit mindestens vier Spritzlöchern aufweist und mit einer eine Drehbewegung der in die Brennraummulde eintretenden Ladeluft erzeugenden Einlasseinrichtung. Der Durchmesser der Brennraummulde beträgt dabei mehr als 55 % des Zylinderdurchmessers. Die durch die Einlasseinrichtung erzeugte Drehbewegung der Ladeluft weist eine nach dem Flügelradverfahren ermittelte Drallzahl von etwa 1,5 bis 2,5 auf, wobei die Einspritzvorrichtung für eine Förderrate von 5 bis 15 mm$^3$/Gradkurbelwinkel und im Druckraum der Einspritzdüse herrschende Einspritzdrücke von 230 bis 2200 bar ausgelegt ist. Ziel der angegebenen Maßnahmen ist es, eine Erhöhung der Leistungsausbeute, eine Verminderung der Rauemissionen und der Emissionen an gasförmigen Abgaskomponenten, eine Geräuschverringerung und eine Entlastung der mechanisch hochbeanspruchten Maschinenteile zu erreichen. Allerdings ist es mit diesen bekannten Maßnahmen nicht möglich die Grenzwerte der Euro5-Norm für Stickoxide und Partikel (PM) für Diesel-Pkw zu erreichen.

Aus dem Dokument BAUDER R ET AL der "Der neue Audi 4,2-I-V8-TDI-Motor. Teil 2: Thermodynamik, Applikation und Abgasnachbehandlung", MTZ MOTORTECHNISCHE ZEITSCHRIFT, VIEWEG VERLAG, WIESBADEN, DE, Bd. 66, Nr. 11, 1. November 2005 (2005-11-01), Seiten 898-907, XP001519238, ISSN: 0024-8525 ist bereits ein Verbrennungsmotor mit Selbstzündung mit einem Motorblock zumindest einem Zylinder und einem diesem zugeordneten Kolben einem Piezo-Inline-Injektor mit einem Durchfluss DDF=460ml mit acht Löchern zur Kraftstoffeinspritzung in den Zylinder sowie einer Einlassvorrichtung für Ladeluft mit zumindest einem Einlasskanal und einem diesem zugeordneten Einlasskanal und einem Einlassventil und einer Auslasseinrichtung für Abgas mit zumindest einem Auslasskanal und einem zugeordneten Auslassventil und einem anschließenden Abgassystem mit Partikelfilter bekannt, wobei der Zylinder einen Zylinderkopf und der Kolben einen Kolbenkopf aufweist und Zylinderkopf und Kolbenkopf Innenflächen eines Brennraums bilden. Der Einlasskanal ist als Drallkanal mit einem zugeordneten Drallkanalventil ausgebildet wobei die Einlassströmung in den Brennraum einen Drall erhält.

Ferner ist aus dem Dokument WESSLAU M ET AL: Homogene Dieselverbrennung - Verfahren zur Emissionsreduzierung, Teil 1: Untersuchungen am Pkw-Dieselmotor", MTZ MOTORTECHNISCHE ZEITSCHRIFT, VIEWEG VERLAG, WIESBADEN, DE, Bd. 67, Nr. 10, 1. Oktober 2006 (2006-10-01), Seiten 798-805, XP001519819, ISSN: 0024-8525 ein Motor mit einer 8-Lochdüse bekannt, wobei durch Einsatz der 8-Loch, statt der 7-Lochdüse das NOx zu Partikel-Tradeoff-Verhalten um 40% verbessert werden konnte.

Aufgabe der vorliegenden Erfindung ist es daher bei einem Verbrennungsmotor mit Selbstzündung eine Reduzierung der Rohemissionen von Stickoxiden und Rußpartikeln zu erreichen, so dass diese möglichst nahe an die durch die Euro5-Norm festgelegten jeweiligen Grenzwert kommen und bei einem Kraftfahrzeug mit einem im Abgassystem angeordneten Partikelfilter die besagten Euro5-Norm Grenzwerte der End-Pipe-Emissionen erreicht oder unterschritten werden können.

Die Aufgabe wird erfindungsgemäß durch ein Verfahren mit den Merkmalen des unabhängigen Patentanspruchs gelöst.

Bei der Erfindung ist der Verbrennungsmotor mit Selbstzündung mit einem Motorblock mit zumindest einem Zylinder und einem diesen zugeordneten Kolben, einem Einspritzsystem zur Kraftstoffeinspritzung in den Zylinder sowie einer Einlasseinrichtung für Ladeluft mit zumindest einem Einlassasskanal und einem zugeordneten Einlassventil und einer Auslasseinrichtung für Abgas mit zumindest einem Auslasskanal und einem diesem zugeordneten Auslassventil und einem anschließendem Abgassystem mit Partikelfilter versehen, wobei der Zylinder einen Zylinderkopf und der Kolben einen Kolbenkopf aufweist und Zylinderkopf und Kolbenkopf Innenflächen eines Brennraumes bilden und in der Oberfläche des Kolbenkopfs eine Kolbenmulde mit einem Muldenrand angeordnet ist, wobei bei einem auf einen Kreis normierten Muldenrand das Verhältnis von Muldenranddurchmesser zu Kolbendurchmesser größer 0,55 ist oder bei einer zu 90% gefüllten Kolbenmulde bei einer auf einen Kreis normierten Füllfläche das Verhältnis der Füllfläche zur Kolbenquerschnittsfläche > 0,30 ist ein Einlasskanal als Drallkanal mit einem zugeordneten Drallkanalventil ausgebildet ist, wobei die Einlassströmung in den Brennraum einen Drall erhält.

Es ist vorgesehen, dass für zumindest einen ausgewählten Zylinder bei Ein - Kanalöffnung Geometrie von Einlasskanal und zugeordnetem Einlassventil bei einem Einkanalbetrieb für zumindest einen ausgewählten Zylinder derart ausgebildet sind, dass die Einlassströmung bei zumindest einem Ventilhub Vh zwischen 2 mm und Vhh = 0.5*Vhm eine Drallanhebung mit einer ventilhubabhängigen Tippelmann-Drallzahl D mit einen Wert > 0,3 aufweist, wobei Vhm den maximalen Ventilhub, insbesondere mit einem Wert Vhm=8mm bezeichnet, die Einlassströmung in einem Ventilhubbereich zwischen Vh = 2 mm und Vhh = 0.5 Vhm eine Drallanhebung mit einer normierten integralen Tippelmann-Drallzahl Di mit einen Wert > 0,40/mm aufweist oder die Einlassströmung in einem Ventilhubbereich zwischen Vh= 2 mm und Vhh=0,5 Vhm eine Drallanhebung aufweist, derart dass bei einer Vermessung der ventilhubabhängigen Tippelmann-Drallzahl D in Abständen von 0,5 mm die gemittelte Tippelmann - Drallzahl Dm für mindestens ein Ventilhubintervall DeltaV= 1mm einen Wert > 0,4 aufweist.

Als normierte integrale Tippelmann - Drallzahl wird das Integral der Drallzahl über ein Ventilhub - Intervall dividiert durch die Intervalllänge bezeichnet.

Als Drallanhebung einer Strömung wird im Kontext der Erfindung ein Drall mit einer angehobenen Drallzahl bezeichnet. Bei einer Einkanalöffnung erfolgt eine Zufuhr von Ladeluft in den Brennraum lediglich über den Drallkanal.

Bei dem Verbrennungsmotor ist vorgesehen, dass der Injektor für zumindest einen ausgewählten Zylinder für eine Lochzahl L $\geq$ 7 für einen Durchfluss DDF an Kraftstoff von DDF= (-230 + 70* L) *( 1+/- 0,20) ml innerhalb von 30sec bei einem Einspritzdruck von 100bar ausgelegt ist.

Bei der Vermessung des Durchfluss des Injektors wird nur der Düsensitz vermessen ohne Düsenelement.

Die erfindungsgemäße Auslegung des Injektors führt zu einer erheblichen Reduzierung der Rußemissionen gegenüber Injektoren die für einen größeren oder kleineren Durchfluss ausgelegt sind.

Bevorzugt sind Injektoren mit einer Lochzahl L $\geq$ 8,9,10,11,12,13, 14, 15.

Die Erfindung wird nachfolgend unabhängig von der zusammenfassenden Darstellung in den Patentansprüchen anhand von in Zeichnungen dargestellten Ausführungsbeispielen näher beschrieben aus denen sich weitere Vorteile und Aspekte der Erfindung ergeben.

Mit dem erfindungsgemäßen Verfahren ist es möglich, im Betriebspunkt 2000 1/min und einem effektiven Mitteldruck von 8 bar eine NOx-Emission von < 1,55 g/kWh bei einer Rußemission von < 0,08 g/kWh zu erreichen. Vorzugsweise können mit dem erfindungsgemäßen Verfahren in dem oben genannten Betriebspunkt auch noch Emissionen von < 1,5, 1,43, 1,38 und 1,3 g/kWh bei Rußemissionen von < 0,075, 0,071, 0,065 oder 0,06 g/kWh erreicht werden.

Ein mit dem erfindungsgemäßen Verfahren betriebenes Kraftfahrzeug weist bei einem Betrieb im neuen europäischen Fahrtzyklus NOx-Rohemissionen mit einem Wert von < 280 mg/km und Partikel-Rohemissionen mit einem Wert von < 35 mg/km auf. Vorzugsweise weist ein derartiges Kraftfahrzeug NOx-Rohemissionen mit einem Wert < 260 mg/km, 235 mg/km, 200 mg/km, 180 mg/km oder 160 mg/km und gleichzeitig Partikel-Rohemissionen, die einen Wert von 40 mg/km, 45 mg/km, 50 mg/km, 55 mg/km oder 60 mg/km nicht überschreiten auf.

Ein derartiges Fahrzeug erreicht oder unterschreitet, abhängig von der Schwungmassenklasse bei Einsatz eines üblichen Partikelfilters die Abgasgrenzwerte der neuen europäischen Euro5-Norm. Ein VW -Golf beispielsweise unterschreitet die EU5-Norm deutlich.

In einer bevorzugten Ausführungsform ist vorgesehen, dass die Einlassströmung bei Einkanalöffnung und bei maximalen Ventilhub Vhm, insbesondere mit Vhm= 8 mm, eine ventilhubabhängige Tippelmann - Drallzahl D mit einen Wert > 0,4 und/oder das Einlassventil einen ventilhubabhängigen Durchflusskoeffizienten $\alpha$K > 0,04 aufweist. Damit lässt sich eine verbesserte Gemischaufbereitung bei gleichzeitig guter Zylinderfüllung erreichen.

Vorteilhafte Weiterbildungen der Erfindung sind den abhängigen Ansprüchen zu entnehmen.

Die Erfindung wird nachfolgend unabhängig von der zusammenfassenden Darstellung in den Patentansprüchen anhand von in Zeichnungen dargestellten Ausführungsbeispielen näher beschrieben aus denen sich weitere Vorteile und Aspekte der Erfindung ergeben.

Es zeigen

Fig. 1 :einen Verbrennungsmotor mit Selbstzündung,

Fig, 2: einen Kolbenkopf mit Kolbenmulde,

Fig. 3 a und 3 b: Drall- und Füllkanäle einer Einlasseinrichtung mit Drallklappe,

Fig. 3c Ventilsitze mit Bearbeitung,

Fig. 4: einen Tippelmann-Prüfstand,

Fig.5: eine Darstellung von ventilhubabhängigen Drall und Durchfluss nach Tippelmann im Einkanalbetrieb,

Fig. 6: eine Darstellung von ventilhubabhängigen Drall und Durchfluss nach Tippelmann im Zweikanalbetrieb,

Fig. 7: Rußemissionen in Abhängigkeit von Öffnungsstellungen einer Drallklappe,

Fig. 8: Rußemissionen in Abhängigkeit von Öffnungsstellungen einer Drallklappe,

Fig. 9: Rußemissionen in Abhängigkeit von Öffnungsstellungen einer Drallklappe.

Fig. 10-12: Rußemissionen in Abhängigkeit von Öffnungsstellungen einer Drallklappe.

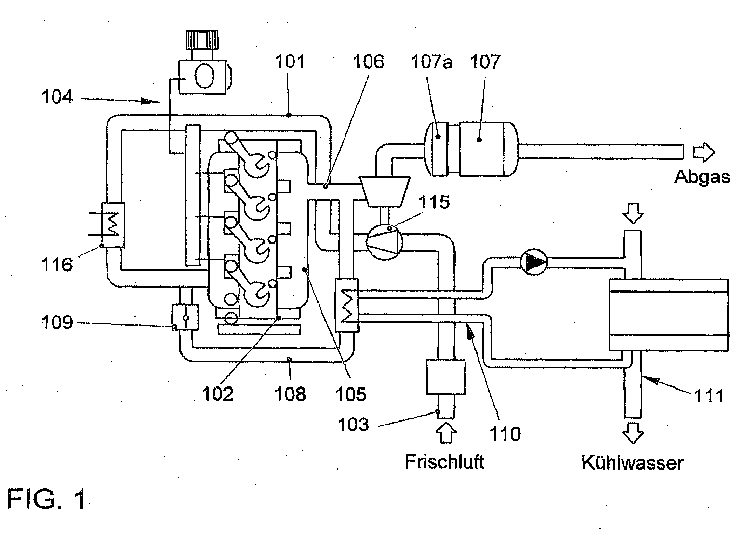

In Figur 1 ist ein PKW - Verbrennungsmotor 101 mit Selbstzündung dargestellt mit dem es gelingt sowohl niedrige Ruß (Partikel) - als auch

NOx- Roh - Emissionswerte zu erreichen. Der erfindungsgemäße Motor wird vorzugsweise mit Kraftstoff nach DIN EN 590 betrieben.

Es versteht sich, dass in anderen, in der Figur 1 nicht dargestellten Ausführungsbeispielen bestimmte Komponenten, die in Figur 1 dargestellt sind, fehlen oder auch weitere Komponenten hinzukommen können, ohne das der Rahmen der Erfindung verlassen wird.

Der Figur 1 gezeigte selbstzündende Verbrennungsmotor 101 weist einen Motorblock 102, vier Zylindern (nicht mit Bezugszeichen versehen), einer Einlassrichtung 103 für Ladeluft, einem als Common-Rail ausgebildeten Einspritzsystem 104 zur Kraftstoffeinspritzung in die Zylinder sowie einer Auslasseinrichtung 105 für Abgas auf. An die Auslasseinrichtung 105 ist ein Abgassystem 106 mit einem Dieselpartikelfilter 107 angeschlossen. Stromauf des Dieselpartikelfilters 107 ist ein Oxidationskatalysator 107a angeordnet, der jedoch in anderen Ausführungsformen der Erfindung fehlen kann.

Der Dieselpartikelfilter 107 hält die bei der Verbrennung des Dieselkraftstoffes entstehenden Rußpartikel zurück. Bevorzugt arbeitet der Partikelfilter 107 ohne den Zusatz von Additiven; es ist jedoch auch der Einsatz von Partikelfiltern, die Additive erfordern denkbar. Der Partikelfilter besteht aus einem porösen Keramikbauteil mit einer edelmetallhaltigen Beschichtung. Um die Durchgängigkeit des Filters auf Dauer zu gewährleisten, müssen die im Filter abgelagerten Partikel durch passive und/oder aktive Regeneration entfernt werden. Mit Wandstromfiltern können heute hohe Abscheideraten von 95 % und mehr der gesamten Partikelmasse bei einer geringen Erhöhung des Kraftstoffverbrauchs erreicht werden. Ähnlich hohe Werte werden mit Durchflussfiltern erreicht bei denen eine über 90 %ige Senkung der Partikelzahl erreicht werden kann.

Das Abgassystem ist mit einem Abgasrückführsystem (AGR) mit einem AGR-Ventil 109 und einer AGR-Kühlung 110 verbunden, wobei die Abgasrückführkühlung 110 mit einem Niedertemperaturwasserkreislauf versehen ist. Mit dem Abgassystem ist ferner ein Turbolader 115 verbunden. Stromab des Verdichters des Abgasturboladers 115 ist ein Ladeluftkühler 116 angeordnet.

Es versteht sich, dass zur Erfüllung strenger Abgasnormen, die verschiedenen in Figur 1 gezeigten Komponenten aufeinander abgestimmt werden müssen.

Im Folgenden werden wichtige Komponenten eines erfindungsgemäß zu betreibenden Verbrennungsmotors genauer dargestellt. Vorzugsweise ist dieser für schnell laufende PKW oder leichte Nutzfahrzeuge ausgelegt.

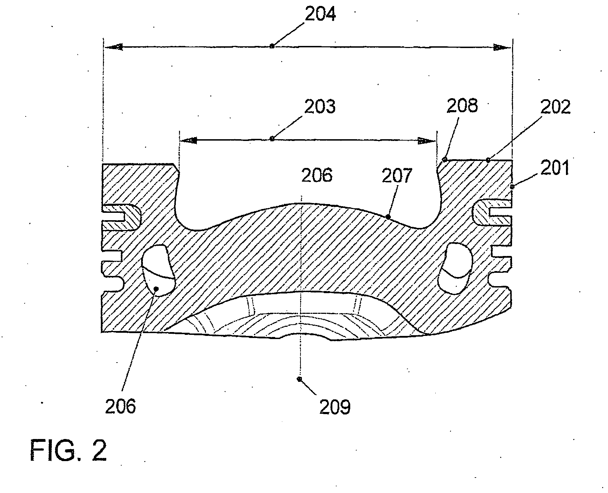

In Figur 2 ist ein Kolbenkopf 201 eines erfindungsgemäß zu betreibenden Verbrennungsmotors mit Selbstzündung schematisch dargestellt, wobei in der Oberfläche 202 des Kolbenkopfs 201 eine durch eine Ausnehmung gebildete Kolbenmulde 206 angeordnet ist. Die Mulde 206 wird durch eine den Wandbereich bildende Muldenkontur 207 definiert, die sich in die Kolbenoberfläche 202 ausgehend vom Kolbenrand 208 erstreckt. Als Muldenrand 208 wird der äußerste Bereich der Kolbenmulde 206 verstanden, während als Muldenrand - Durchmesser der Querschnittsdurchmesser der Mulde 206 an der Stelle, an der die Muldenkontur 207 eine Steigung 1 aufweist bezeichnet wird. An dieser Stelle ist die Muldenkontur 207 parallel zur Kolbenachse 209.

Der in Figur 2 dargestellte Kolbenkopf 201 ist im Betrieb des Verbrennungsmotors in einem in der Figur nicht dargestellten Zylinder angeordnet, in dem sich der Kolben hin und her bewegt und derart mit einer nicht dargestellten Kurbelwelle verbunden ist, dass der Kolben eine Bewegung mit einer Umkehr an einer oberen und unteren Totpunktlage ausführt. Der Zylinder weist einen Zylinderkopf auf, der mit dem Kolbenkopf Innenflächen eines Brennraumes, in den Kraftstoff eingespritzt wird, bildet. Der in den Zylinder eingespritzte Kraftstoff bildet mit verdichteten Gas ein Kraftstoff-Gasgemisch, dass durch im Betrieb des Verbrennungsmotors erzeugte Kompressionswärme gezündet wird.

Typischerweise weist der Verbrennungsmotor vier bis sechs Zylinder auf.

Die Kolbenmulde 206 weist einen Bereich der Kontur 207 mit geringerer Tiefe und einen peripheren Bereich der Kontur 207 mit einer größeren Tiefe, jeweils bezogen auf die Kolbenoberfläche auf, wobei die Erfindung Ausführungsformen mit größeren und kleineren Tiefenunterschieden umfasst.

Die Kolbenmulde 206 kann auch einen nicht kreisförmigen Kolbenrand 208 aufweisen. In diesem Fall wird der Muldenranddurchmesser 203 bei einem auf einen Kreis nominierten Muldenrand definiert.

Das Verhältnis von Muldenranddurchmesser zu Kolbenranddurchmesser ist > 0,55, vorzugsweise > 0,58, 0,60, 0,62, 0,65, 0,70 oder 0,80, was zu einer größeren freien Einspritzlänge und einer verbesserten Gemischaufbereitung führt.

In einer weiteren Ausführungsform der Erfindung ist bei einer zu 90% gefüllten Kolbenmulde 206 bei einer auf einen Kreis nominierten Füllfläche das Verhältnis der Füllfläche zur Kolbenquerschnittsfläche > 0,30. Auch bei dieser Ausführungsform der Erfindung handelt es sich um eine relativ große Kolbenmulde mit den entsprechenden oben dargestellten Vorteilen.

Die in Figur 2 gezeigt Kolbenmulde 206 weist in ihren peripheren Wandbereich eine Hinterschneidung auf, dass heißt der maximale Kolbeninnendurchmesser ist größer als der Kolbenranddurchmesser 203. In anderen Ausführungsformen der Erfindung weist die Kolbenmulde 206 keine Hinterschneidung auf.

Der maximale Muldeninnendurchmesser ist vorzugsweise höchstens 15%, 10%, 8%, 6%, 4%, 3% oder 1% größer als der Muldenrand - Durchmesser 203. Damit kann eine größere freie Strahllänge des eingespritzten Kraftstoffs erreicht und der Auftrag von flüssigen Kraftstoff auf den peripheren Wandbereich vermindert werden.

Der oder die Zylinder weisen eine Bohrung von weniger als 110 mm auf. Bevorzugt kann die Bohrung auch < als 100 mm, 95 mm oder 90 mm betragen. Das Einzelzylindervolumen beträgt weniger als 0,8 l vorzugsweise < als 0,7l oder 0,6l.

Ferner ist der Zylinder mit einem Einspritzsystem zur direkten Kraftstoffeinspritzung in den Zylinder verbunden. Das Einspritzsystem ist in Common-Rail-Technik ausgebildet mit dem Kraftstoff mit bis zu 2200 bar in den Zylinder eingespritzt wird. Es versteht sich, dass die Erfindung auch mit anderen Einspritzsystemen und/oder höheren Einspritzdrücken arbeitet.

Das Einspritzsystem umfasst zur Gewährleistung einer hohen Homogenität des Gemischs und geringen Russbildung während des Dieselverbrennungsprozesses einen Injektor mit einem Düsensitz und einem Düsenelement mit mehr als 7 Löchern. Vorzugsweise weist der Injektor eine Lochzahl von > = 8, 9, 10, 12 oder 14 auf. Der Injektor ist vorzugsweise zentrisch zur Kolbenmulde angeordnet.

Bei einem Injektor mit 8 Lochdüse ist ein Lochdurchmesser von 0,123 mm bevorzugt. Die größere Lochanzahl ermöglicht eine gleichmäßigere Verteilung des Kraftstoffs im Brennraum und damit eine Emissonsreduzierung bei möglichst niedrigem Kraftstoffverbrauch.

Der Injektordurchfluss ist an die Lochzahl angepasst. Vorzugsweise ist für eine Lochzahl > 7 der Durchfluss DDF am Kraftstoff durch den Injektor innerhalb von 30 Sekunden bei einem Einspritzdruck von 100 bar bestimmt durch DDF = (-230 +70*L) *(1+-0,20), wobei die Lochzahl mit L bezeichnet ist.

Bei der Vermessung des Durchfluss des Injektors wird nur der Düsensitz vermessen ohne Düsenelement.

Mit dem Zylinder ist eine Einlasseinrichtung für Ladeluft mit zumindest einem Einlasskanal mit einem zugeordneten Einlassventil und eine Auslasseinrichtung für Abgas mit zumindest einem Auslassventil und einem diesem zugeordneten Auslassventil verbunden, wie im weiteren genauer dargestellt wird. Als Ladeluft wird die dem Motor zugeführte Ladung an Frischluft bezeichnet - auch für den Fall eines Motors ohne Turboaufladung oder dergleichen.

Bei dem erfindungsgemäß zu betreibenden Motor weist die Einlasseinrichtung zumindest einen Einlasskanal auf, der als Drallkanal mit einem zugeordneten Drallkanalventil ausgebildet ist, wobei die Einlassströmung in den Brennraum einen Drall (Swirl) erhält - eine Verwirbelung der Ladeluft mit einer im wesentlichen parallel zur Zylinderachse orientierten Drehachse. Als Einlassströmung wird die während der Ansaugphase in den Zylinder einströmende Ladeluft bezeichnet.

Der Drall der Einlassströmung in den Brennraum unterstützt die Gemischaufbereitung. Der Drall sorgt für eine optimale Homogenisierung von dem AGR-Luft Gemisch und Kraftstoff. Für jede Drehzahl und jeder Mitteldruck gibt es einen optimalen Drall der zu minimalen Kraftstoffverbrauch und NOx- und Ruß- Emissionen führt. Die Erfindung zielt auf die Optimierung des Dalls der Einlassströmung zur Verminderung von Russbildung bei niedriger NOx-Bildung.

Der Drall der Einlassströmung wird durch die Geometrie des Einlasskanals und des Einlassventils bestimmt; bei mehr als einem Einlasskanal durch die Geometrie der Einlasskanäle und der Einlassventile die jeweils von Ladeluft durchströmt werden. Zur Erreichung eines vorgegebenen Dralls werden die Geometrie von Einlasskanal und zugeordnetem Einlassventil mittels an sich bekannter Optimierungsverfahren festgelegt.

In einer bevorzugten Ausführungsform weist der Verbrennungsmotor eine Einlasseinrichtung mit einen Drallkanal und einen Füllkanal auf, wobei der Füllkanal für Ladeluft betriebspunktabhängig geöffnet oder geschlossen werden kann.

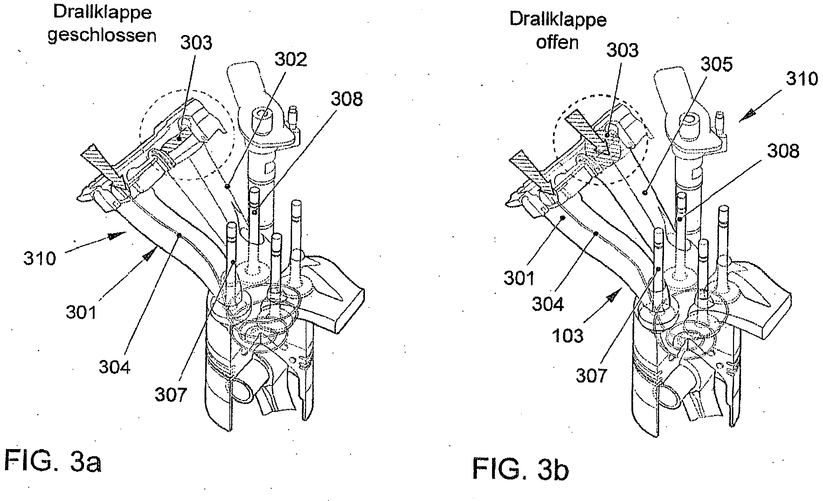

In Figur 3a, Figur 3b sind ein Drallkanal 301 und ein Füllkanal 302 einer Einlasseinrichtung für Ladeluft des Verbrennungsmotors dargestellt.

Drallkanal 301 und Füllkanal 302 weisen jeweils ein Drallkanalventil 307 bzw. Füllkanalventil 308 auf. Der Füllkanal 302 kann durch eine schaltbare Drallklappe 303 geöffnet und geschlossen werden. Vorzugsweise weist die Drallklappe 303 mindestens zwei Öffnungsstellungen, bevorzugt drei und mehr Öffnungsstellungen auf. Als Öffnungsstellung wird auch die geschlossene Stellung verstanden. Ferner kann die Dralfklappe auch stufenlos verstellt werden.

In Figur 3a ist die Drallklappe 303 geschlossen, in Figur 3b ist die Drallklappe 303 dagegen offen. Bei geschlossener Drallklappe kann Ladeluft lediglich durch den Drallkanal 301 dem Brennraum zugeführt werden.

Bei dem in den Figuren 3a, 3b gezeigten Drallkanal 301 handelt es sich um einen Tangentialkanal mit direkter Einströmung. Die Erfindung umfasst jedoch auch Drallkanäle mit anderen Geometrien, wie beispielsweise einen Tangentialkanal oder Spiralkanäle mit flacher oder steiler schraubenförmiger Rampe.

Der Füllkanal 302 wird möglichst gradlinig durchströmt, um ein höhere Zylinderbefüllung als durch den Drallkanal 301 zu ermöglichen, in welchem die Luftführung den Durchfluss behindert. Mittels des Drallkanal 302 kann daher bedarfsabhängig der Luftdurchsatz erhöht werden. Der Füllkanal kann jedoch auch als Spiralkanal ausgebildet sein.

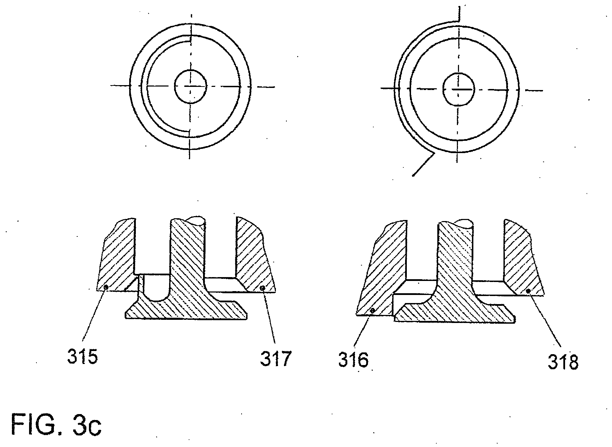

Das Drallkanalventil ist erfindungsgemäß ausgebildet zur Anhebung des Dralls bei geringem Ventilhüben, wie beispielhaft in Fig. 3c illustriert ist.

Zur Anhebung des Dralls bei niedrigem Ventilhub weist der Ventilsitz eine, vorzugsweise in Bezug auf eine vertikale Ventilachse asymmetrische, Bearbeitung auf; beispielsweise in der Art einer Maskierung oder Abschirmung, wodurch der Luftmassenstrom zu Beginn des Ventilhubs in eine definierte Richtung gelenkt wird.

Bei einem Ventil mit Abschirmung wird durch ein Abschirmblech am Ventil die definierte Strömungsrichtung vorgegeben; vergleiche linke Seite von Fig. 3 c. Bei kleinem Ventilhub wird in einem Bereich der Peripherie des Ventilsitzes 315 zwischen 30° und 210° ein Spalt 317 gebildet.

Die rechte Seite von Fig. 3c zeigt einen Ventilsitz, wobei in den Zylinderkopf eine Fase eingearbeitet ist, die im Folgenden als Sitzdrallfase (SDF) bezeichnet wird. Bei kleinem Ventilhub wird in einem Bereich der Peripherie des Ventilsitzes 315 zwischen 30° und 210° ein Spalt 318 gebildet.

In beiden Fällen muss der Luftmassenstrom bei kleinen Ventilhüben (in einem Bereich von 2mm bis 4mm oder 50% des maximalen Ventilhubs Vhm) durch den Spalt 317 bzw. 318 strömen. Vorzugsweise wird der Luftmassenstrom bei kleinen Ventilhüben von der Zylinderwand abgelenkt und damit eine Drehung der Zylinderladung bewirkt.

Im Rahmen der Erfindung wird der Drall der Einlassströmung durch die ventilabhängige Tippelmann - Drallzahl charakterisiert, die auf einem Tippelmann - Prüfstand gemessen werden kann; vgl. J.B. Heywood Internal Combustion Engine Fundamentals, 1998.

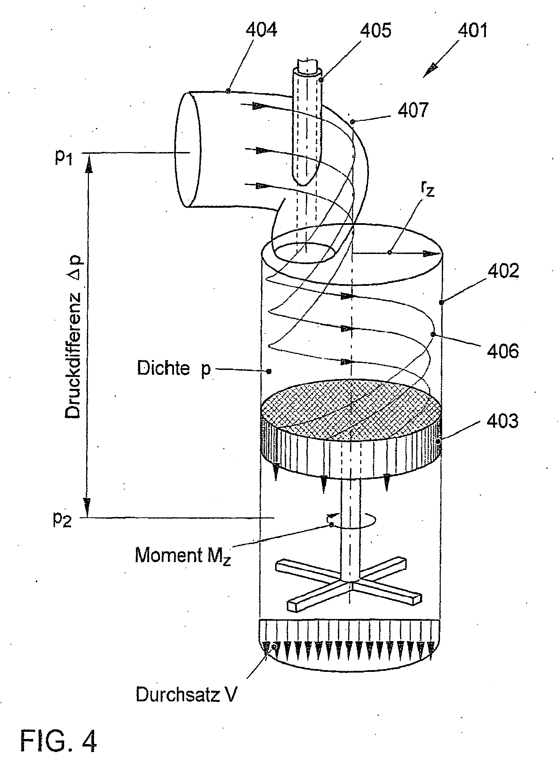

In Figur 4 ist der schematische Aufbau eines Tippelmann-Prüfstandes 401 zur Messung der ventilhubabhängigen Tippelmann-Drallzahl D dargestellt, wobei durch einen Einlasskanal 404 mit einem Einlassventil 405 einströmende Ladeluft dem Inneren des Zylinders 402 zugeführt wird. Eine Drallströmung 406 wird in dem Zylinder 402 über eine Wabe 403 in Richtung der Zylinderachse 407 umgelenkt. Das aus dem Drehimpuls der Drallströmung 406 resultierende Drehmoment MZ wird an der Wabe 403 in Abhängigkeit von dem Ventilhub des Einlassventils 405 gemessen. Aus dem Drehmoment MZ kann über folgende Gleichung die ventilhubabhängige Tippelmann-Drallzahl D berechnet werden.

$$D = \frac{M_Z \cdot R_{Zyl}}{V_2 \cdot p_L}$$

$M_Z$ -Drehmoment an der Wabe
$R_{Zyl}$ -Zylinderradius
$V$ -Volumenstrom durch den Zylinder
$p_L$ -Dichte der Luft im Zylinder

Im Gegensatz zu dem Drallmoment MZ ist die Drallzahl D für unterschiedliche Zylinderköpfe ähnlicher Motoren direkt vergleichbar und wird daher zur Charakterisierung des Dralls gemäß der Erfindung eingesetzt.

Die relativ große Kolbenmulde hat den Vorteil einer besseren Füllung mit Ladeluft und eine geringere thermische Belastung des Kolbens, erfordert jedoch eine Zunahme des Dralls gegenüber einer relativ kleineren Kolbenmulde. Einerr Abnahme des Dralls wird erfindungsgemäß entgegengewirkt.

Erfindungsgemäß wird der Verbrennungsmotor mit einer Einlassströmung mit Drallanhebung bei niedrigen Ventilhüben betrieben, wobei vorgesehen ist dass die Einlassströmung bei zumindest einem Ventilhub Vh zwischen 2 mm und Vhh = 0.5*Vhm eine Drallanhebung mit einer ventilhubabhängigen Tippelmann-Drallzahl D mit einen Wert > 0,3; 0,4; 0,5; 0,6; 0,7 aufweist, wobei Vhm den maximalen Ventilhub, insbesondere mit einem Wert Vhm=8mm bezeichnet, die Einlassströmung in einem Ventilhubbereich zwischen Vh = 2 mm und Vhh = 0.5*Vhm eine Drallanhebung mit einer normierten integralen Tippelmann-Drallzahl Di mit einen Wert > 0,40/mm, 0,50/mm oder 0,60/mm aufweist oder die Einlassströmung in einem Ventilhubbereich zwischen Vh= 2 mm und Vhh=0,5Vhm eine Drallanhebung aufweist, derart dass bei einer Vermessung der ventilhubabhängigen Tippelmann-Drallzahl D in Abständen von 0,5 mm die gemittelte Tippelmann - Drallzahl Dm für mindestens ein Ventilhubintervall DeltaV= 1 mm einen Wert > 0,4; 0,5; 0,6; 0,7 aufweist.

Einlassströmungen von Verbrennungsmotoren mit Selbstzündung mit vergleichbar relativ großer Kolbenmulde im Stand der Technik haben für kleine Ventilhübe (Bereich von 2mm bis 5mm oder Bereich von 2mm bis 50% von Vhm) eine ventilhubabhängigen Tippelmann-Drallzahl D mit einen Wert um 0,2.

Vorteilhaft weist die Einlassströmung in einen Bereich kleiner Ventilhübe eine Drallanhebung auf, sodass in diesem Ventilhubbereich eine definitive hohe Drallausrichtung der Einlassströmung aufrecht erhalten wird, die bei einem Kolben mit einer relativ großen Kolbenmulde mit einem Verhältnis von Muldenranddurchmesser zu Kolbenranddurchmesser > 0,55 es erlaubt sowohl eine niedrige Partikel - als auch NOx- Rohemissionen zu erreichen.

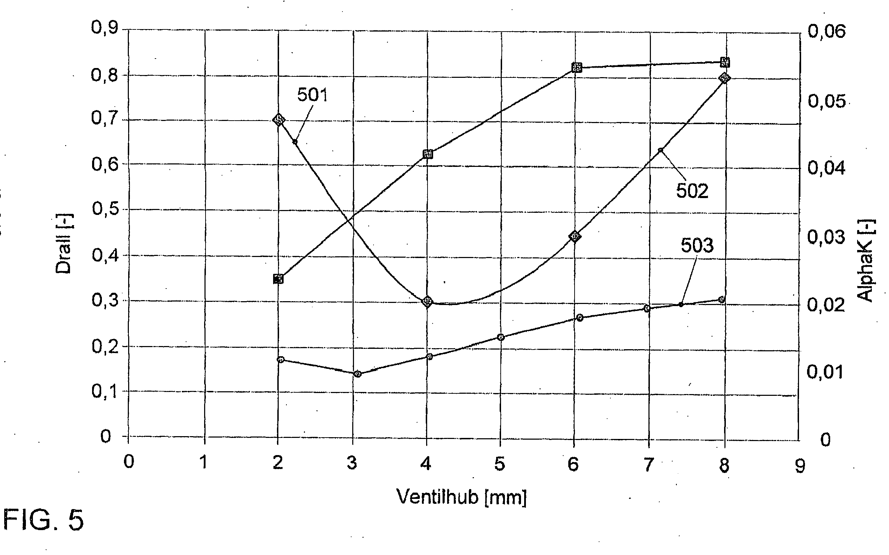

Die Figur 5 zeigt Messungen der Drallzahl bei einer Einlasseinrichtung mit einem Drallkanal und einem Füllkanal, wobei der Füllkanal durch eine Drallklappe geschlossen ist (Einkanalbetrieb), und damit ein erhöhter Drall der Einlassströmung bewirkt wird. Die Drallanhebung bei kleinen Ventilhüben wird vorzugsweise durch eine Bearbeitung des Ventilsitzes des Drallkanalventils erreicht. Besonders bevorzugt ist hierbei die erwähnte Sitzdrallfase SDF.

In Figur 5 ist mit den Kurven 501 bzw. 503 die ventilhubabhängige Tippelmann-Drallzahl D gegenüber dem Ventilhub aufgetragen, wobei 501 die Drallzahl gemäß der Erfindung mit einer Sitzdrallfase und die Kurve 503 die Drallzahl bei ansonsten gleichem Drallkanal und Drallkanalventil ohne Drallanhebung durch eine Sitzdrallfase beschreibt.

Der maximale Ventilhub hat einen Wert von 8mm, kann aber selbstverständlich auch einen davon verschiedenen Wert haben.

Erkennbar ist, dass die Einlassströmung gemäß Kurve 501 bei niedrigen Ventilhüben von 2mm, 3mm oder 4mm jeweils hohe Werte D von 0,7, 0,4 und 0,3 aufweist.

Bevorzugt sind in Rahmen der Erfindung ferner Werte der Drallzahl > 2; 3; 4 im Ventilhubbereich 2mm bis 5mm.

Ferner kann Einlassströmung in einem Ventilhubbereich zwischen Vh = 2 mm und Vhh = 0.5*Vhm eine Drallanhebung mit einer normierten integralen Tippelmann-Drallzahl Di mit einen Wert > 0,40/mm aufweist. Als normierte integrale Tippelmann - Drallzahl wird das Integral von über ein Ventilhub - Intervall dividiert durch die Intervalllänge bezeichnet.

Ferner kann die Einlassströmung in einem Ventilhubbereich zwischen Vh= 2 mm und Vhh=0,5Vhm eine Drallanhebung aufweisen, derart dass bei einer Vermessung der ventilhubabhängigen Tippelmann-Drallzahl D in Abständen von 0,5 mm die mitttere Tippelmann - Drallzahl Dm für mindestens ein Ventilhubintervall DeltaV= 1mm einen Wert > 0,4 aufweist.

In Figur 5 ist erkennbar, dass die Drallzahl aufgetragen gegen den Ventilhub zwischen einem Wert bei Vh=2mm und einem Wert bei 8mm etwa bei 4mm Ventilhub ein Minimum aufweist. Die Drallzahl nimmt ausgehend von ihrem Wert bei 2mm Ventilhub ab, erreicht in einem Bereich um 0,5 Vhm ein Minimum und steigt anschließend wieder an. Mit dieser "Badewannenform" gelingt es, bei niedrigem und bei hohem Ventilhub hohe Drallzahlen zu erreichen.

Die Einlassströmung gemäß Kurve 503 hat dagegen für kleine Ventilhübe im Bereich zwischen 2 und 4 mm geringere Drallzahlen D im Bereich zwischen 0,15 und 2.

Bei Einzelöffnung (Nur Drallkanal)

Erfindungsgemäß ist ferner ein hoher Drall D von mehr als 0,6 auch bei maximalem Ventilhub vorgesehen um damit die Gemischaufbereitung weiter zu verbessern. Der hohe Drall bei maximalem Ventilhub wird vorzugsweise durch Auslegung des Drallkanals erreicht.

Bei Doppelöffnung (Drall+Füllkanal)

Erfindungsgemäß ist ferner ein Drall D von mehr als 0,3 auch bei maximalem Ventilhub vorgesehen um damit die Gemischaufbereitung weiter zu verbessern. Der Drall bei maximalem Ventilhub wird vorzugsweise durch Auslegung des Drall-/ Füllkanals erreicht.

Neben der Drallzahl ist der Durchfluss durch das oder die Einlassventile eine wichtige Größe zur Charakterisierung der Einlassströmung.

Der ventilhubabhängige Durchflusskoeffizient

$\alpha k$ charakterisiert die Einströmung in den Zylinder durch das oder die Einlassventile, das heißt der Luftdurchsatz des Ventils, wobei man einen tatsächlich durchgesetzten Luftmassenstrom auf einen theoretisch möglichen Luftmassenstrom bezieht, wie beispielsweise in der Veröffentlichung C. Kopp, Variable Ventilsteuerung für PKW-Dieselmotoren mit einer Direkteinspritzung, Magdeburg 2006 dargestellt ist. Ein hoher Wert von $\alpha k$ wirkt sich positiv auf die Zylinderfüllung aus.

$\alpha k$ für einen Zylinder kann gemäß der folgenden Formel ermittelt werden.

$$\alpha k = \frac{m_{tats}}{m_{theor}} = \frac{m_{tats}}{A_{zyl} \cdot c_s \cdot p_s}$$

mtats -tatsächlicher Luftmassenstrom [kg/s]
mtheor-theoretischer Luftmassenstrom [kg/s]
Azyl -Querschnittsfläche des Messzylinders [m2]
cs -Strömungsgeschwindigkeit bei isentroper Durchströmung [m/s]
ps -Luftdichte im Zylinder bei isentroper Durchströmung [kg/m3]

wobei

$$c_s = \sqrt{\frac{2 \cdot \kappa \cdot R_L \cdot T}{\kappa - 1} \cdot \left[ 1 - \left( \frac{p_{nach}}{p_{vor}} \right)^{\frac{\kappa-1}{\kappa}} \right]}$$

$R_L$ -spezielle Gaskonstante für Luft [J/(kg-K)]
T -Temperatur [K]
K -Isentropenexponent [-]
$p_{nach}$ -Druck nach Ventil [Pa]
$p_{vor}$ -Druck vor Ventil [Pa]

$$p_s = \frac{p_{vor}}{R_L \cdot T} \cdot \left( \frac{p_{nach}}{p_{vor}} \right)^{\frac{1}{K}}$$

Der Druck vor dem Ventil pvor entspricht in den obigen Gleichungen dem Umgebungsdruck. Nach dem Ventil ist der im Messzylinder herrschende Druck pnach durch den Verdichter des Prüfstandes vorgegeben. Bei der Messung wird eine konstante Druckdifferenz von 50hPa eingestellt.

Bei der Auslegung der Einlasskanäle und der Einlassventile wird vorzugsweise einem Zielkonflikt zwischen hohem Drall für eine gute Gemischaufbereitung und einer hohen Durchfluß des Ventils für eine gute Zylinderfüllung Rechnung getragen werden. Dies wird dadurch erreicht, dass bei geringen Ventilhüben eine Drallanhebung und bei maximalem Ventilhub ein hoher Durchfluss vorgesehen ist.

In Figur 5 stellt Kurve 503 den Verlauf des ventilhubabhängigen Durchflusskoeffizient $\alpha k$ in einem Be-

reich des Ventilhubs zwischen 2 mm und 8 mm dar.

Vorzugsweise ist bei dem erfindungsgemäßen Motor bei 8 mm Ventilhub der Durchflusskoeffizient > 0,04. In weiteren Ausführungsformen der Erfindung ist der Durchflusskoeffizient $\alpha k > 0,045$ oder 0,05 bei 8 mm Ventilhub. Damit wird bei der Erfindung ein hoher Drall bei kleinen Ventilhüben mit einem hohen Durchflussflusskoeffizienten bei großen bzw. maximalen Ventilhub kombiniert.

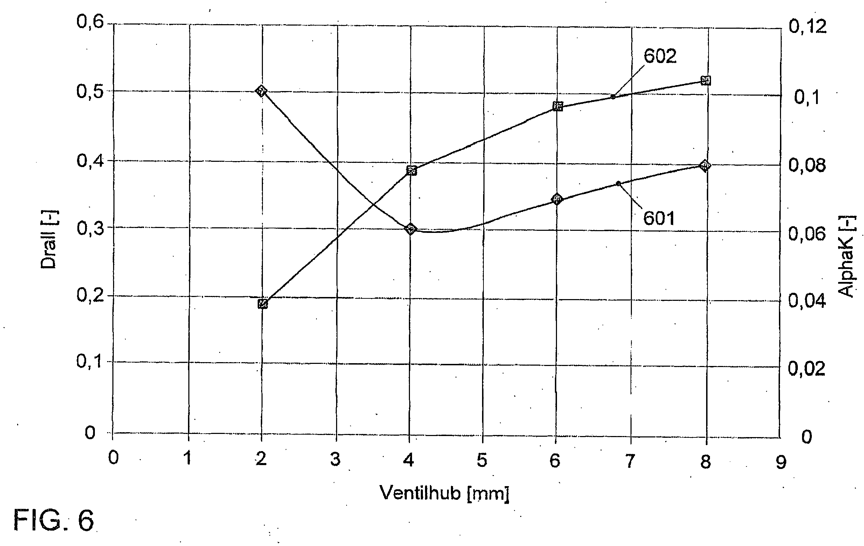

Die Figur 6 zeigt Messungen der Drallzahl bei einer Einlasseinrichtung mit einem Drallkanal und einem vollständig geöffneten Füllkanal (Zweikanalbetrieb), wobei der Füllkanal nicht durch eine Drallkappe geschlossen ist und damit ein höherer Durchsatz an Ladeluft erreicht werden kann. Bei einem Ventilhub in einem Bereich zwischen 2 und 4 mm weist die ventilhubabhängige Tippelmann-Drallzahl einen Wert > 0,035 auf. Bei 2 mm Ventilhub ist die Drallzahl > 0,45. Bei einem Ventilhub von 8 mm ist die Drallzahl > als 0,35 und der Durchfluß AlphaK>0,1.

In Figur 6 ist analog zu Figur 5 erkennbar, dass die Drallzahl aufgetragen gegen den Ventilhub zwischen einem Wert bei Vh=2mm und einem Wert bei 8mm etwa bei 4mm Ventilhub ein Minimum aufweist. Die Drallzahl nimmt ausgehend von ihrem Wert bei 2mm Ventilhub ab, erreicht in einem Bereich um 0,5 Vhm (8mm) ihr Minimum und steigt anschließend wieder an. Mit dieser "Badewannenform" gelingt es, bei niedrigem und bei hohem Ventilhub hohe Drallzahlen zu erreichen.

In einer weiteren Ausführungsform weist die Drallzahl bei 8mm Ventilhub einen Wert von maximal 0,6 auf.

Die Kurve 602 stellt den Verlauf des ventilhubabhängigen Durchflusskoeffizienten $\alpha k$ dar und zeigt gegenüber der Kurve 502 der Figur 5 eine Erhöhung des ventilhubabhängigen Durchflusskoeffizienten $\alpha k$.

Die Erfindung ermöglicht es, betriebspunktabhängig bei konstanter NOx- Roh -Emission die Ruß - Roh-Emissionen in Abhängigkeit von einer Öffnungsstellung einer Drallklappe einzustellen.

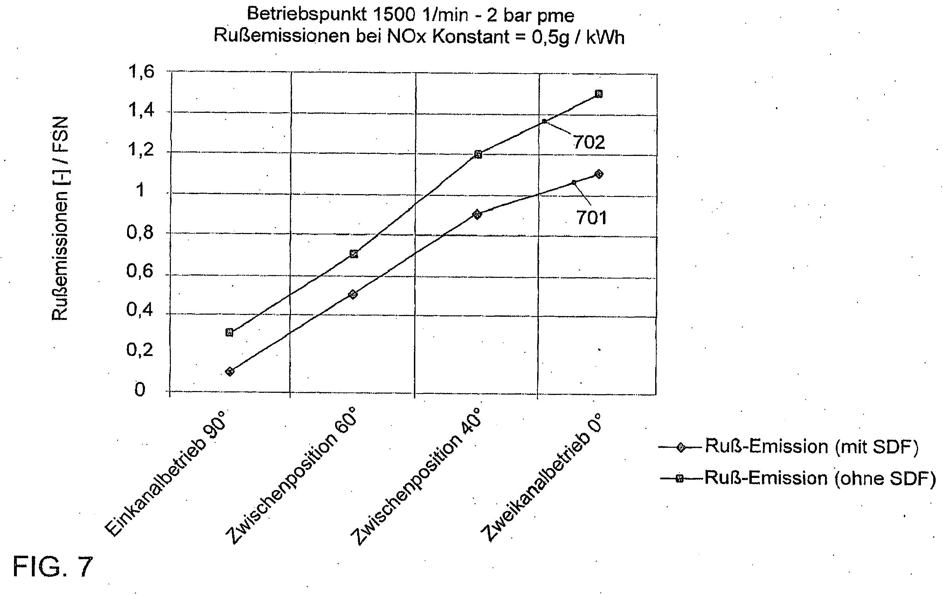

In Figur 7 sind beispielhaft für einen aufgeladenen 4-Zylinder-Dieselmotor mit 1,968cm3 Hubraum und einer Bohrung von 81mm bei 95,5mm Hub, einem Muldendurchmesser von 53mm, einem Muldenranddurchmesser von 51,88mm, einer maximalen Leistung von 103kW bei einer Drehzahl von 4200 1/Min., einen maximalen Drehmoment von 320Nm bei einer Drehzahl von 1750 bis 2500 1/Min., einer Verdichtung von 16,5 zu 1 Ruß - Roh- Emissionen in Einheiten von Filter-Smoke-Number (FSN) bei konstanter NOx-Rohemisson von 0,5g/kWh dargestellt. Der Betriebspunkt liegt bei einer Drehzahl von 1500 1/Min. und einem effektiven Mitteldruck von 2 bar. Es versteht sich, dass die Erfindung nicht auf diesen konkreten Motor beschränkt ist, sondern gleichartige Motoren, ggfs auch ohne Aufladung umfasst.

Die hier eingesetzte Einlasseinrichtung weist dabei einen Drallkanal und einen Füllkanal auf, wobei der Füllkanal mit einer Drallklappe versehen ist. Die Drallklappe kann, vorzugsweise stufenlos in verschiedene Öffnungsstellungen geschaltet werden, wobei bei einer Stellung von 90° die Drallklappe geschlossen und bei einer Öffnungsstellung von 0° voll geöffnet ist. Zwischenpositionen von 60° und 40° sind bevorzugt.

Die Kurve 701 bezeichnet den Verlauf der Rußemissionen bei einem erfindungsgemäß betriebenen Motor mit Drallanhebung. Zum Vergleich zeigt die Kurve 702 den Verlauf der Rußemission in Abhängigkeit von der Öffnungsstellung der Drallklappe bei einem gleichen Motor ohne Drallanhebung. Erkennbar ist, dass die Rußemissionen gemäß Kurve 701 für den erfindungsgemäßen Motor bei allen Öffnungspositionen um mindestens 0.1 FSN unter den Werten der Vergleichskurve 702 liegen. Erkennbar ist ferner, dass die Rußemissionen bei geschlossener Drallklappe, d. h. einem Einkanalbetrieb über den Drallkanal am niedrigsten ist und mit zunehmender Öffnung der Drallklappe ansteigen.

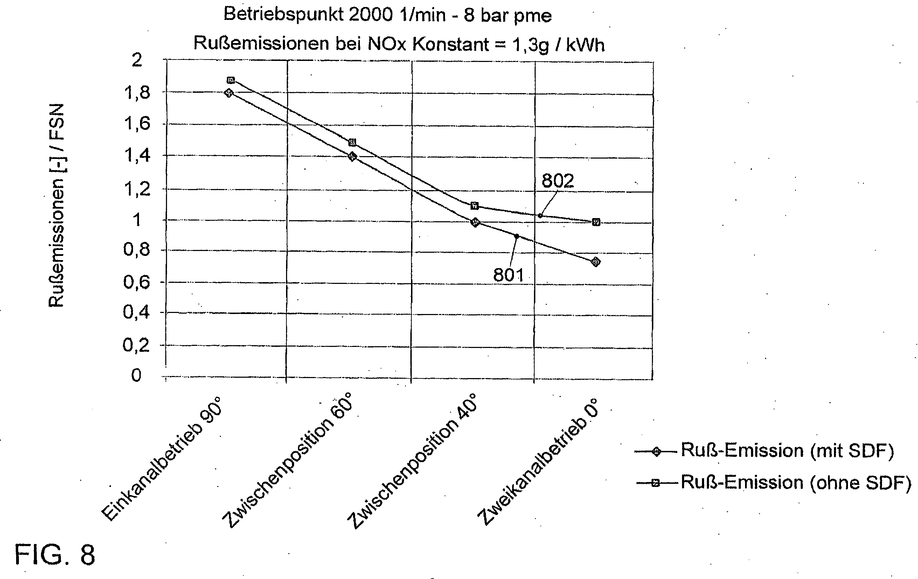

In Figur 8 sind für den gleichen Motor in einem Betriebspunkt mit einer Drehzahl von 2000 1/Min. und einem effektiven Mitteldruck von 8 bar die Rußemission bei einer konstanten NOx-Rohrmission von 1,3 g/kWh für verschiedene Öffnungsstellungen der Drallklappe dargestellt. Die Kurve 801 bezeichnet den Verlauf der Rußemission in Abhängigkeit von der Öffnungsstellung der Drallklappe gemäß der Erfindung, während die Kurve 802 Vergleichsdaten ohne erfindungsgemäße Drallanhebung zeigt. Es ist erkennbar, dass die Rußemission im erfindungsgemäßen Fall um mindestens 0,1 FSN niedriger als im Fall konventioneller Technik liegen. Im Unterschied zur Situation gemäß Figur 7 ist in diesem Betriebspunkt der Zweikanalbetrieb mit vollständig geöffneter Drallklappe günstiger als der Einkanalbetrieb.

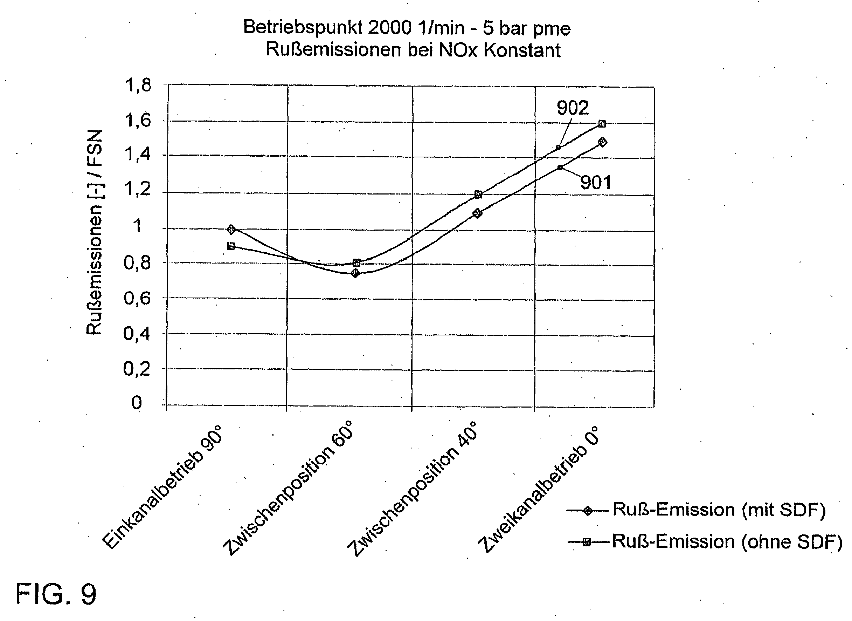

In Fig. 9 sind für den gleichen Motor bei einem Betriebspunkt bei einer Drehzahl von 2000 1/min und einem effektiven Mitteldruck von 5 bar die Ruß- Rohmissionen bei einer konstanten NOx-Rohemission von 1 g/kwh verschiedene Öffnungsstellungen der Drallklappe dargestellt. Die Kurve 901 bezeichnet den Verlauf der Rußemissionabhängigkeit von der Öffnungsstelle der Drallklappe gemäß der Erfindung, während die Kurve 902 Vergleichsdaten ohne erfindungsgemäße Drallanhebung zeigt. Ein minimaler Wert der Rußemission liegt hier bei einer Zwischenposition der Drallklappe mit einer Öffnungsstellung von ca. 60 °.

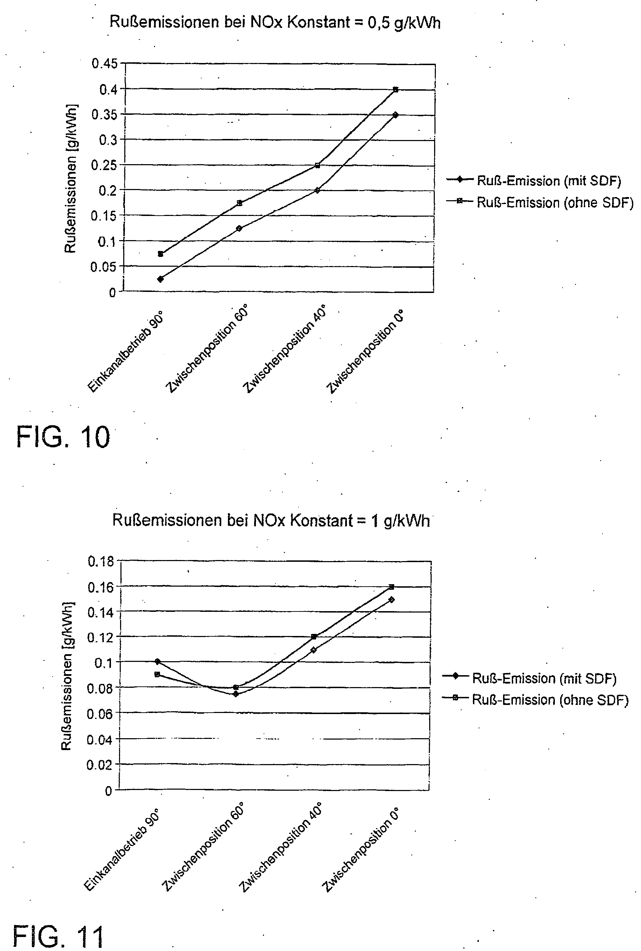

Die Figuren 10-12 zeigen den Figuren 7-9 entsprechende Darstellungen, wobei die Russemissionen nicht in Einheiten FSN sondern in Einheiten g/kWh aufgetragen sind.

Der Verbrennungsmotors mit Selbstzündung kann daher, wenn das Drallkanalventil eine Bearbeitung zur Drallanhebung bei kleinen Ventilhüben aufweist mittels unterschiedlicher Öffnungsstellungen der Drallklappe so betrieben werden, dass in einem Betriebspunkt von 1500 1/Min. und einem effektiven Mitteldruck von 2 bar und einer konstanten NOx-Rohemission von < als 0,7 g/kWh eine Russzahl von <0,2 FSN (dies entspricht von Rußemissionen von < als 0,2 g/kWh) eingestellt wird. Die Drallanhebung besteht vorzugsweise in einem Bereich zwischen 2mm und 4mm, ggfs. mit Drallwerten sowie Durchflusskoeffizienten wie in Zusammenhang mit den Figuren 5 und 6 und der zugehörigen Beschreibung dargestellt wurde.

Ferner ist vorgesehen, dass in einem Betriebspunkt mit 2000 1/Min. und 5 bar effektiven Mitteldruck und einer NOx-Rohemission von < als 1,2 g/kWh eine Rußzahl eine Rußzahl FSN von < als 0,8 (entsprechend Rußemissionen von < als 0,1 g/kWh) eingestellt wird und/oder in einem Betriebspunkt bei 2000 1/Min. und 8 bar effektiven Mitteldruck und einer konstanten NOx-Rohemission von weniger als 1,5 g/kWh eine Russzahl < 1FSN (entsprechend Rußemissionen von weniger als 0,2 g/kWh) eingestellt wird.

**Bezugszeichenliste**

| | |
|---|---|
| 101 | Verbrennungsmotor |
| 102 | Motorblock |
| 103 | Einlasseinrichtung |
| 104 | Einspritzsystem |
| 105 | Auslasseinrichtung |
| 106 | Abgassystem |
| 107 | Partikelfilter |
| 107a | Katalysator |
| 108 | Abgasrückführsystem |
| 109 | Abgasrückführventil |
| 110 | Abgasrückführkühlung |
| 111 | Kühlkreislauf |
| 115 | Turbolader |
| 116 | Ladeluftkühler |
| 201 | Kolbenkopf |
| 202 | Oberfläche des Kolbenkopfs |
| 203 | Muldenranddurchmesser |
| 204 | Kolbendurchmesser |
| 205 | Kühlkanal |
| 206 | Kolbenmulde |
| 207 | Muldenkontur |
| 208 | Muldenrand |
| 209 | Kolbenachse |
| 301 | Drallkanal |
| 302 | Füllkanal |
| 303 | Drallklappe |
| 304 | Luftstrom-Drallkanal |
| 305 | Luftstrom Füllkanal |
| 306 | Zylinder |
| 307 | Ventil |
| 308 | Ventil |
| 310 | Einlasseinrichtung |
| 315 | Ventilsitz |
| 316 | Ventilsitz |
| 317 | Spalt |
| 401 | Tippelmann-Messstand |
| 402 | Zylinder |
| 403 | Wabe |
| 404 | Einlasskanal |
| 405 | Ventil |
| 406 | Drallströmung |
| 407 | Zylinderachse |
| 501 | Kurve |
| 502 | Kurve |
| 601 | Kurve |
| 602 | Kurve |
| 701 | Kurve |
| 702 | Kurve |
| 801 | Kurve |
| 802 | Kurve |
| 901 | Kurve |
| 902 | Kurve |

**Patentansprüche**

1. Verfahren zum Betrieb eines Verbrennungsmotor (101) mit Selbstzündung mit einem Motorblock (102) mit zumindest einem Zylinder (306, 402) und einem diesem zugeordneten Kolben, einer Injektoreinrichtung mit einer Mehrzahl von Löchern zur Kraftstoffeinspritzung in den Zylinder (306, 402) sowie einer Einlasseinrichtung (103) für Ladeluft mit zumindest einem Einlassasskanal (404) und einem diesem zugeordneten Einlassventil und einer Auslasseinrichtung (105) für Abgas mit zumindest einem Auslasskanal und einem zugeordneten Auslassventil und einem anschließendem Abgassystem (106) mit Partikelfilter (107) wobei der Zylinder (306 oder 402) einen Zylinderkopf und der Kolben einen Kolbenkopf (201) aufweist und Zylinderkopf und Kolbenkopf (201) Innenflächen eines Brennraumes bilden und der Einlasskanal (404) als Drallkanal (301) mit einem zugeordneten Drallkanalventil ausgebildet ist, wobei die Einlassströmung in den Brennraum einen Drall erhält, wobei der Injektor für zumindest einen ausgewählten Zylinder (306, 402) für eine Lochzahl L > 7 für einen Durchfluss DDF an Kraftstoff von DDF= (-230 + 70* L) *(1+/-0,20) ml innerhalb von 30sec bei einem Einspritzdruck von 100bar ausgelegt ist **dadurch gekennzeichnet, dass** die Einlassströmung bei zumindest einem Ventilhub Vh zwischen 2 mm und Vhh = 0.5*Vhm eine Drallanhebung mit einer ventilhubabhängigen Tippelmann-Drallzahl D mit einen Wert > 0,3 aufweist, wobei Vhm den maximalen Ventilhub oder den Wert Vhm=8mm bezeichnet, die Einlassströmung in einem Ventilhubbereich zwischen Vh = 2 mm und Vhh = 0.5*Vhm eine Drallanhebung mit einer normierten integralen Tippelmann-Drallzahl Di mit einen Wert > 0,40/mm aufweist oder die Einlassströmung in einem Ventilhubbereich zwischen Vh= 2 mm und Vhh=0,5*Vhm eine Drallanhebung aufweist, derart dass bei einer Vermessung der ventilhubabhängigen Tippelmann-Drallzahl D in Abständen von 0,5 mm die mittlere Tippelmann - Drallzahl Dm für mindestens ein Ventilhubintervall DeltaV= 1 mm einen Wert > 0,4 aufweist.

2.   Verfahren nach Anspruch 1 **dadurch gekennzeichnet, dass** der Injektor eine Kraftstoffzuführung hat, die ausgelegt ist für einen Einspritzdruck von mindestens 1200 bar, 1600bar, 1800bar, 2000bar, 2200 bar.

3.   Verfahren nach Anspruch 1 oder 2, **dadurch gekennzeichnet, dass** in der Oberfläche des Kolbenkopfs eine Kolbenmulde mit einem Muldenrand angeordnet ist, wobei bei einem auf einen Kreis normierten Muldenrand das Verhältnis von Muldenranddurchmesser zu Kolbendurchmesser größer 0,55 ist oder bei einer zu 90% gefüllten Kolbenmulde bei einer auf einen Kreis normierten Füllfläche das Verhältnis der Füllfläche zur Kolbenquerscnittsfläche > 0,30 ist.

4.   Verfahren nach einem der vorhergehenden Ansprüche, **dadurch gekennzeichnet, dass** die Einlassströmung bei maximalen Ventilhub Vhm, insbesondere mit Vhm= 8 mm, eine ventilhubabhängige Tippelmann - Drallzahl D mit einen Wert > 0,4 aufweist und/ oder das Einlassventil einen ventilhubabhängigen Durchflusskoeffizienten $\alpha K > 0,04$ aufweist.

5.   Verfahren nach einem der vorhergehenden Ansprüche, **dadurch gekennzeichnet, dass** die Einlasseinrichtung als weiteren Einlasskanal einen Füllkanal mit einem zugeordneten Füllkanalventil aufweist.

6.   Verfahren nach Anspruch 5, **dadurch gekennzeichnet, dass** der Füllkanal durch eine schaltbare Drallklappe geöffnet und geschlossen werden kann, wobei die Drallklappe vorzugsweise mindestens zwei Öffnungsstellungen aufweist.

7.   Verfahren nach einem der Ansprüche 5 oder 6, **dadurch gekennzeichnet, dass** die Einlassströmung bei vollständig geöffnetem Füllkanal bei zumindest einem Ventilhub Vh zwischen 2 mm und Vhh = 0.5*Vhm eine ventilhubabhängige Tippelmann-Drallzahl D mit einen Wert > 0,3 aufweist.

8.   Verfahren nach einem der Ansprüche 5 bis 7, **dadurch gekennzeichnet, dass** bei maximalen Ventilhub Vhm und vollständig geöffnetem Füllkanal die ventilhubabhängige Tippelmann - Drallzahl D einen Wert > 0,3 und/oder der ventilhubabhängige Durchlasskoeffizient $\alpha K$ von Drallkanalventil und Füllkanalventil einen Wert > 0,1 aufweist.

9.   Verfahren nach einem der Ansprüche 5 bis 8, **dadurch gekennzeichnet, dass** bis zu einem effektiven Mitteldruck pme von weniger als 4 bar ein Betrieb lediglich mit über den Drallkanal zugeführter Ladeluft möglich ist.

10.   Verfahren nach einem der Ansprüche 5 bis 9, **dadurch gekennzeichnet, dass** nach einem Bereich zwischen 3 und 7 bar ein Betrieb mit einem teilweise geöffneten Füllkanal möglich ist.

11.   Verfahren nach einem der Ansprüche 5 bis 10, **dadurch gekennzeichnet, dass** für einen effektiven Mitteldruck pme > 5 bar ein Betrieb mit vollständig geöffnetem Füllkanal möglich ist.

12.   Verfahren nach einem der Ansprüche 5 bis 11, **dadurch gekennzeichnet, dass** die Drallklappe um eine Achse schwenkbar ist und zumindest zwei Öffnungsstellungen aus der Gruppe der Öffnungsstellungen von 90°, 60°, 40° oder 0° einnehmen kann.

13.   Verfahren nach Anspruch 5, **dadurch gekennzeichnet, dass** die Drallklappe bei einer Drehzahl von 1500 1/Min. und einem effektiven Mitteldruck von 2 bar bei konstanter NOx-Emission Rußemissionen aufweist, die um einen Wert von mindestens 0,1 Einheiten unter dem Wert Rußemissionen ohne Drallanhebung bei gleicher Drehzahl, gleichem effektiven Mitteldruck und gleicher NOx-Emission liegen.

14.   Verfahren nach den Ansprüchen 5 oder 6, **dadurch gekennzeichnet, dass** in einem Betriebspunkt mit einer Drehzahl von 2000 1/Min. und einem effektiven Mitteldruck von 8 bar die Rußemissionen um einen Wert von mindesten 0,1 Einheiten unter dem Wert ohne Drallanhebung im gleichen Betriebspunkt liegen.

15.   Verfahren nach einem der vorhergehenden Ansprüche, **dadurch gekennzeichnet, dass** ein Abgasrückführungssystem vorgesehen ist.

16.   Verfahren nach einem der vorhergehenden Ansprüche, **dadurch gekennzeichnet, dass** ein Abgasturbolader vorgesehen ist.

17.   Verfahren nach einem der vorhergehenden Ansprüche, **dadurch gekennzeichnet, dass** das Einspritzsystem als Common-Rail-System ausgebildet ist.

18.   Verfahren nach einem der vorhergehenden Ansprüche, **dadurch gekennzeichnet, dass** die Kolbenmulde einen mittleren Bereich mit geringerer Tiefe und einen peripheren Bereich mit einer größeren Tiefe, jeweils bezogen auf den ebenen Bereich der Kolbenoberfläche aufweist.

**19.** Verfahren nach einem der vorangehenden Ansprüche, **dadurch gekennzeichnet, dass** die Kolbenmulde in ihrem peripheren Wandbereich eine Hinterschneidung aufweist.

**20.** Verfahren nach einem der vorhergehenden Ansprüche, **dadurch gekennzeichnet, dass** der ausgewählte Zylinder eine Bohrung < = 100 mm aufweist.

**21.** Verfahren nach einem der vorhergehenden Ansprüche, **dadurch gekennzeichnet, dass** das Einzelzylindervolumen < = 0,8 L ist.

**22.** Verfahren nach einem der vorhergehenden Ansprüche, **dadurch gekennzeichnet, dass** die Nenndrehzahl > als 3100 1/Min. ist.

**23.** Verfahren nach einem der vorhergehenden Ansprüche, **dadurch gekennzeichnet, dass** die spezifische Leistung > als 30 kW ist.

## Claims

**1.** Method for operating a combustion engine (101) having self-ignition, having an engine block (102) having at least one cylinder (306, 402) and a piston assigned thereto, an injection installation having a plurality of holes for the injection of fuel into the cylinder (306, 402), and

- an inlet installation (103) for charge air, having at least one inlet duct (404) and an inlet valve assigned thereto, and
- an outlet installation (105) for exhaust gas, having at least one outlet duct and an assigned outlet valve and an adjoining exhaust gas system (106) having a particle filter (107),
- wherein the cylinder (306 or 402) has a cylinder head and the piston has a piston head (201), and the cylinder head and the piston head (201) form internal faces of a combustion chamber, and
- the inlet duct (404) is configured as a swirl duct (301) having an assigned swirl duct valve, wherein the inlet flow into the combustion chamber is imparted a swirl,
- wherein the injector for at least one selected cylinder (306, 402) for a hole count L > 7 is conceived for a flow rate DDF of fuel of DDF = (-230 + 70*L) * (1 +/- 0.20) ml within 30 sec at an injection pressure of 100 bar,
**characterized in that**
- the inlet flow in the case of at least a valve stroke Vh between 2 mm and Vhh = 0.5*Vhm has an increase in swirl by way of a valve-stroke-dependent Tippelmann swirl coefficient D having a value > 0.3, wherein Vhm indicates the maximum valve stroke or the value Vhm = 8 mm,
- the inlet flow in a valve stroke range between Vh = 2 mm and Vhh = 0.5*Vhm has an increase in swirl by way of a standardized integral Tippelmann swirl coefficient Di having a value > 0.40/mm, or
- the inlet flow in a valve stroke range between Vh = 2 mm and Vhh = 0.5*Vhm has an increase in swirl in such a manner that when measuring the valve-stroke-dependent Tippelmann swirl coefficient D at intervals of 0.5 mm the mean Tippelmann swirl coefficient Dm for at least one valve stroke interval ∆V = 1 mm has a value > 0.4.

**2.** Method according to Claim 1, **characterized in that** the injector has a fuel supply which is conceived for an injection pressure of at least 1200 bar, 1600 bar, 1800 bar, 2000 bar, 2200 bar.

**3.** Method according to Claim 1 or 2, **characterized in that** a piston recess having a recess periphery is disposed in the surface of the piston head, wherein in the case of a recess periphery that is standardized to a circle the ratio of the recess periphery diameter to the piston diameter is higher than 0.55, or in the case of a piston recess filled to 90% in the case of a filling face that is standardized to a circle the ratio of the filling face to the piston cross-sectional face is > 0.30.

**4.** Method according to one of the preceding claims, **characterized in that** the inlet flow at the maximum valve stroke Vhm, in particular at Vhm = 8 mm, has a valve-stroke-dependent Tippelmann swirl coefficient D having a value > 0.4, and/or the inlet valve has a valve-stroke-dependent flow rate coefficient $\alpha K > 0.04$.

**5.** Method according to one of the preceding claims, **characterized in that** the inlet installation as a further inlet duct has a filling duct having an assigned filling duct valve.

**6.** Method according to Claim 5, **characterized in that** the filling duct can be opened and closed by a switchable swirl flap, wherein the swirl flap preferably has at least two opening positions.

**7.** Method according to one of Claims 5 or 6, **characterized in that** the inlet flow in the case of a completely opened filling duct at a valve stroke Vh at least between 2 mm and Vhh = 0.5*Vhm has a valve-stroke-dependent Tippelmann swirl coefficient D having a value > 0.3.

**8.** Method according to one of Claims 5 to 7, **characterized in that** at the maximum valve stroke Vhm and a completely opened filling duct the valve-stroke-dependent Tippelmann swirl coefficient D has a value > 0.3, and/or the valve-stroke-dependent flow rate coefficient $\alpha K$ of the swirl duct valve and the filling duct valve has a value > 0.1.

9. Method according to one of Claims 5 to 8, **characterized in that** up to an effective mean pressure pme of less than 4 bar an operation is possible only by way of charge air that is supplied by way of the swirl duct.

10. Method according to one of Claims 5 to 9, **characterized in that** beyond a range between 3 and 7 bar an operation by way of a partially opened filling duct is possible.

11. Method according to one of Claims 5 to 10, **characterized in that** for an effective mean pressure pme > 5 bar an operation by way of a completely opened filling duct is possible.

12. Method according to one of Claims 5 to 11, **characterized in that** the swirl flap is pivotable about an axis and can assume at least two opening positions from the group of opening positions of 90°, 60°, 40° or 0°.

13. Method according to Claim 5, **characterized in that** the swirl flap at a rotational speed of 1500 l/min and an effective mean pressure of 2 bar at a constant NOx emission has soot emissions which by a value of at least 0.1 units lie below the value of soot emissions without an increase in swirl at the same rotational speed, the same effective mean pressure, and the same NOx emission.

14. Method according to Claims 5 or 6, **characterized in that** at an operating point at a rotational speed of 2000 1/min and an effective mean pressure of 8 bar the soot emissions by a value of at least 0.1 units lie below the value without an increase in swirl at the same operating point.

15. Method according to one of the preceding claims, **characterized in that** an exhaust gas recirculation system is provided.

16. Method according to one of the preceding claims, **characterized in that** an exhaust-gas turbocharger is provided.

17. Method according to one of the preceding claims, **characterized in that** the injection system is configured as a common rail system.

18. Method according to one of the preceding claims, **characterized in that** the piston recess has a central region having a comparatively minor depth, and a peripheral region having a comparatively large depth, in each case in relation to the planar region of the piston surface.

19. Method according to one of the preceding claims, **characterized in that** the piston recess in the peripheral wall region thereof has an undercut.

20. Method according to one of the preceding claims, **characterized in that** the selected cylinder has a bore < = 100 mm.

21. Method according to one of the preceding claims, **characterized in that** the individual cylinder capacity < = 0.8 1.

22. Method according to one of the preceding claims, **characterized in that** the nominal rotational speed is > than 3100 1/min.

23. Method according to one of the preceding claims, **characterized in that** the specific output is > than 30 kW.

## Revendications

1. Procédé pour faire fonctionner un moteur à combustion interne (101) à auto-allumage, comprenant un bloc-moteur (102) avec au moins un cylindre (306, 402) et un piston associé à celui-ci, un dispositif d'injecteur avec une pluralité de trous pour l'injection de carburant dans le cylindre (306, 402), ainsi qu'un dispositif d'admission (103) pour l'air de suralimentation avec au moins un conduit d'admission (404) et une soupape d'admission associée à celui-ci et un dispositif d'échappement (105) pour le gaz d'échappement avec au moins un conduit d'échappement et une soupape d'échappement associée et un système de gaz d'échappement s'y raccordant (106) avec un filtre à particules (107), le cylindre (306 ou 402) présentant une culasse et le piston présentant une tête de piston (201) et la culasse et la tête de piston (201) formant des surfaces internes d'une chambre de combustion et le conduit d'admission (404) étant réalisé sous forme de conduit de turbulence (301) avec une soupape de conduit de turbulence associée, l'écoulement d'admission dans la chambre de combustion étant mis en tourbillonnement, l'injecteur étant conçu pour au moins un cylindre sélectionné (306, 402) avec un nombre de trous L > 7 pour un débit DDF de carburant DDF = (-230 + 70*L) * (1±0,20) ml en l'espace de 30 s pour une pression d'injection de 100 bars, **caractérisé en ce que** l'écoulement d'admission présente, pour au moins une course de soupape Vh entre 2 mm et Vhh = 0,5*Vhm, une augmentation des turbulences avec un indice de turbulence de Tippelmann D dépendant de la course de la soupape ayant une valeur > 0,3, Vhm étant la course de soupape maximale ou désignant la valeur Vhm = 8 mm,
l'écoulement d'admission présente, dans une région de la course de soupape comprise entre Vh = 2 mm et Vhh = 0,5*Vhm, une augmentation des turbulences avec un indice de turbulence de Tippelmann intégral Di normé ayant une valeur > 0,4/mm ou l'écoulement d'admission présente, dans une région de la course de soupape comprise entre Vh = 2 mm et Vhh = 0,5*Vhm, une augmentation des turbulences telle que, lors d'une mesure de l'indice de turbulence de Tippelmann D dépendant de la course de la soupape à intervalles de 0,5 mm, l'indice de turbulence de Tippelmann moyen Dm pour au moins un intervalle de la course de soupape DeltaV = 1mm présente une valeur > 0,4.

2. Procédé selon la revendication 1, **caractérisé en ce que** l'injecteur présente une alimentation en carburant qui est conçue pour une pression d'injection d'au moins 1200 bars, 1600 bars, 1800 bars, 2000 bars, 2200 bars.

3. Procédé selon la revendication 1 ou 2, **caractérisé en ce que** dans la surface de la tête de piston est disposé un creux de piston avec un bord de creux, le rapport du diamètre du bord de creux au diamètre du piston, pour un bord de creux normé à un cercle, est supérieur à 0,55, ou pour un creux de piston rempli à 90 %, pour une surface de remplissage normée à un cercle, le rapport de la surface de remplissage à la surface en section transversale du piston est > 0,30.

4. Procédé selon l'une quelconque des revendications précédentes, **caractérisé en ce que** l'écoulement d'admission, pour une course de soupape maximale Vhm, en particulier avec Vhm = 8 mm, présente un indice de turbulence Tippelmann D dépendant de la course de la soupape ayant une valeur > 0,4 et/ou la soupape d'admission présente un coefficient de débit dépendant de la course de la soupape αK > 0,04.

5. Procédé selon l'une quelconque des revendications précédentes, **caractérisé en ce que** le dispositif d'admission présente, en tant que conduit d'admission supplémentaire, un conduit de remplissage avec une soupape de conduit de remplissage associée.

6. Procédé selon la revendication 5, **caractérisé en ce que** le conduit de remplissage peut être ouvert et fermé par un papillon de turbulence commutable, le papillon de turbulence présentant de préférence au moins deux positions d'ouverture.

7. Procédé selon l'une quelconque des revendications 5 ou 6, **caractérisé en ce que** l'écoulement d'admission, lorsque le conduit de remplissage est complètement ouvert, pour au moins une course de soupape Vh comprise entre 2 mm et Vhh = 0,5*Vhm, présente un indice de turbulence Tippelmann D dépendant de la course de la soupape ayant une valeur > 0,3.

8. Procédé selon l'une quelconque des revendications 5 à 7, **caractérisé en ce que**, pour une course maximale de la soupape Vhm et un conduit de remplissage complètement ouvert, l'indice de turbulence de Tippelmann D dépendant de la course de la soupape présente une valeur > 0,3 et/ou le coefficient de passage dépendant de la course de la soupape αK de la soupape du conduit de turbulence et de la soupape du conduit de remplissage présente une valeur > 0,1.

9. Procédé selon l'une quelconque des revendications 5 à 8, **caractérisé en ce que**, jusqu'à une pression moyenne efficace pme inférieure à 4 bars, un fonctionnement avec seulement de l'air de suralimentation acheminé par le biais du conduit de turbulence est possible.

10. Procédé selon l'une quelconque des revendications 5 à 9, **caractérisé en ce qu'**après une plage comprise entre 3 et 7 bars, un fonctionnement avec un conduit de remplissage partiellement ouvert est possible.

11. Procédé selon l'une quelconque des revendications 5 à 10, **caractérisé en ce que**, pour une pression moyenne efficace pme > 5 bars, un fonctionnement avec un conduit de remplissage complètement ouvert est possible.

12. Procédé selon l'une quelconque des revendications 5 à 11, **caractérisé en ce que** le papillon de turbulence peut pivoter autour d'un axe et peut adopter au moins deux positions d'ouverture à partir du groupe des positions d'ouverture de 90°, 60°, 40° ou 0°.

13. Procédé selon la revendication 5, **caractérisé en ce que** le papillon de turbulence, pour un régime de 1500 tr/m et une pression moyenne efficace de 2 bars pour des émissions de NOx constantes, présente des émissions de suie qui se situent autour d'une valeur d'au moins 0,1 unité en dessous de la valeur des émissions de suie sans augmentation des turbulences pour un même régime, une même pression moyenne efficace et des émissions de NOx identiques.

**14.** Procédé selon les revendications 5 ou 6, **caractérisé en ce qu'**à un point de fonctionnement à un régime de 2000 tr/m, et pour une pression moyenne efficace de 8 bars, les émissions de suie se situent autour d'une valeur d'au moins 0,1 unité en dessous de la valeur sans augmentation des turbulences au même point de fonctionnement.

**15.** Procédé selon l'une quelconque des revendications précédentes, **caractérisé en ce qu'**un système de recirculation des gaz d'échappement est prévu.

**16.** Procédé selon l'une quelconque des revendications précédentes, **caractérisé en ce qu'**un turbocompresseur à gaz d'échappement est prévu.

**17.** Procédé selon l'une quelconque des revendications précédentes, **caractérisé en ce que** le système d'injection est réalisé sous forme de système à rampe commune.

**18.** Procédé selon l'une quelconque des revendications précédentes, **caractérisé en ce que** le creux de piston présente une région centrale avec une plus faible profondeur et une région périphérique avec une plus grande profondeur, à chaque fois par rapport à la région plane de la surface du piston.

**19.** Procédé selon l'une quelconque des revendications précédentes, **caractérisé en ce que** le creux de piston présente une contre dépouille dans sa région de paroi périphérique.

**20.** Procédé selon l'une quelconque des revendications précédentes, **caractérisé en ce que** le cylindre sélectionné présente un alésage ≤ 100 mm.

**21.** Procédé selon l'une quelconque des revendications précédentes, **caractérisé en ce que** le volume d'un cylindre individuel est ≤ 0,8 L.

**22.** Procédé selon l'une quelconque des revendications précédentes, **caractérisé en ce que** le régime nominal est > 3100 t/m.

**23.** Procédé selon l'une quelconque des revendications précédentes, **caractérisé en ce que** la puissance spécifique est > 30 kW.

FIG. 1

FIG. 2

Drallklappe geschlossen

303
302
308
310
301
304
307

FIG. 3a

Drallklappe offen

303
305
310
308
301
304
103
307

FIG. 3b

315     317     316     318

FIG. 3c

FIG. 4

FIG. 5

FIG. 6

EP 2 103 790 B1

Betriebspunkt 1500 1/min - 2 bar pme
Rußemissionen bei NOx Konstant = 0,5g / kWh

FIG. 7

Betriebspunkt 2000 1/min - 8 bar pme

Rußemissionen bei NOx Konstant = 1,3g / kWh

FIG. 8

Betriebspunkt 2000 1/min - 5 bar pme
Rußemissionen bei NOx Konstant

FIG. 9

Rußemissionen bei NOx Konstant = 0,5 g/kWh

FIG. 10

Rußemissionen bei NOx Konstant = 1 g/kWh

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3612029 A1

**In der Beschreibung aufgeführte Nicht-Patentliteratur**

- Der neue Audi 4,2-I-V8-TDI-Motor. Teil 2: Thermodynamik, Applikation und Abgasnachbehandlung. **BAUDER R et al.** MTZ MOTORTECHNISCHE ZEITSCHRIFT. VIEWEG VERLAG, 01. November 2005, vol. 66, 898-907
- Homogene Dieselverbrennung - Verfahren zur Emissionsreduzierung, Teil 1: Untersuchungen am Pkw-Dieselmotor. **WESSLAU M et al.** MTZ MOTORTECHNISCHE ZEITSCHRIFT. VIEWEG VERLAG, 01. Oktober 2006, vol. 67, 798-805
- **J.B. HEYWOOD.** *Internal Combustion Engine Fundamentals,* 1998
- **C. KOPP.** *Variable Ventilsteuerung für PKW-Dieselmotoren mit einer Direkteinspritzung,* 2006